# EUROPÄISCHE PATENTANMELDUNG

(11) **EP 1 527 917 A1**
(43) Veröffentlichungstag der Anmeldung: **04.05.2005**
(21) Anmeldenummer: 04023572.3
(22) Anmeldetag: 04.10.2004
(51) Int. Cl.: B60H 1/24, F16K 15/14

(54) **Rückschlagventil für die Fahrzeugentlüftung**

(30) Priorität: 28.10.2003 DE 20316536 U
(71) Anmelder: TRW Automotive Electronics & Components GmbH & Co. KG, 67677 Enkenbach/Alsenborn (DE)
(72) Erfinder: Dippel, Thomas, 67680 Neuhemsbach (DE); Lauhoff, Dirk, 67659 Kaiserslautern (DE)
(74) Vertreter: Sties, Jochen, Dipl.-Ing.

(57) **Zusammenfassung**

Ein Rückschlagventil (10), insbesondere zur Entlüftung eines Fahrzeug-Innenraumes, mit einem Rahmen (12), in welchem mindestens eine Ausströmöffnung (14) gebildet ist, die von einem Ventilsitz (16) umgeben ist, und mindestens einer Ventilklappe (18), die zwischen einer geschlossenen Stellung, in der sie an dem Ventilsitz (16) anliegt und die Ausströmöffnung (14) verschließt, und einer geöffneten Stellung verstellbar ist, in der sie die Ausströmöffnung (14) freigibt, ist dadurch gekennzeichnet, daß die Ventilklappe (18) aus einem elastisch federnden Material besteht und derart angebracht ist, daß eine Rückstellkraft erzeugt wird, welche die Ventilklappe (18) gegen den Ventilsitz (16) beaufschlagt.

## Beschreibung

Die Erfindung betrifft ein Rückschlagventil, insbesondere zur Entlüftung eines Fahrzeug-Innenraumes, mit einem Rahmen, in welchem mindestens eine Ausströmöffnung gebildet ist, die von einem Ventilsitz umgeben ist, und mindestens einer Ventilklappe, die zwischen einer geschlossenen Stellung, in der sie an dem Ventilsitz anliegt und die Ausströmöffnung verschließt, und einer geöffneten Stellung verstellbar ist, in der sie die Ausströmöffnung freigibt.

Ein solches Rückschlagventil ermöglicht, die über ein Lüftungssystem dem Fahrzeug-Innenraum zugeführte Luft abzuführen. Wenn keine Luft aus dem Fahrzeug-Innenraum ausströmt, liegt die Ventilklappe an dem ihr zugeordneten Ventilsitz an, so dass das Eindringen von Feuchtigkeit, Abgas oder Schmutz in den Innenraum verhindert ist.

Üblicherweise ist die Ventilklappe am Rahmen durch ein Scharnier befestigt. Weiterhin ist der Ventilsitz üblicherweise schräg zur Wirkungsrichtung der Erdanziehungskraft, wenn sich das Rückschlagventil in seiner vorgesehenen Einbaulage befindet, ausgerichtet, so dass die Ventilklappe aufgrund der Schwerkraft am Ventilsitz anliegt. Sobald im Innenraum des Fahrzeugs ein leichter Überdruck gegenüber dem Außenraum herrscht, wird die Ventilklappe vom Ventilsitz abgehoben, so dass ein Druckausgleich stattfindet.

Der Nachteil bei den bekannten Rückschlagventilen besteht darin, dass die vorgesehene Einbaulage eingehalten werden muß, damit das konstruktiv vorgesehene Öffnungsverhalten der Ventilklappe erzielt wird. Eine von der vorgesehenen Einbaulage abweichende Ausrichtung des Ventilelementes führt dazu, dass die Ventilklappe mit einer größeren oder kleineren Kraft als vorgesehen am Ventilsitz anliegt.

Die Aufgabe der Erfindung besteht darin, ein Rückschlagventil der eingangs genannten Art dahingehend weiterzubilden, dass das Rückschlagventil in einer Vielzahl von Ausrichtungen eingesetzt werden kann.

Zu diesem Zweck ist erfindungsgemäß vorgesehen, dass die Ventilklappe aus einem elastisch federnden Material besteht und derart angebracht ist, dass eine Rückstellkraft erzeugt wird, welche die Ventilklappe gegen den Ventilsitz beaufschlagt. Die Erfindung beruht auf dem Grundgedanken, die Ventilklappe mittels ihrer Eigenelastizität in die geschlossene Stellung vorzuspannen. Auf diese Weise wird die Ventilklappe unabhängig von der Schwerkraft in die geschlossene Stellung zurückgestellt, so dass das Ventil in jeder beliebigen Einbaulage verwendet werden kann, beispielsweise auch über Kopf. Die Ventilklappe selbst besteht vorzugsweise aus einem starren und leichten Element, beispielsweise einer biegesteifen Kunststofffolie. Je geringer das Gewicht der Ventilklappe ist, desto geringer ist auch der Schwerkrafteinfluss auf das Öffnungsverhalten.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 eine Vorderansicht eines erfindungsgemäßen Rückschlagventils;
- Figur 2 einen Schnitt entlang der Linie II-II von Figur 1;
- Figur 3 in vergrößertem Maßstab den in Figur 2 mit III bezeichnetem Ausschnitt.

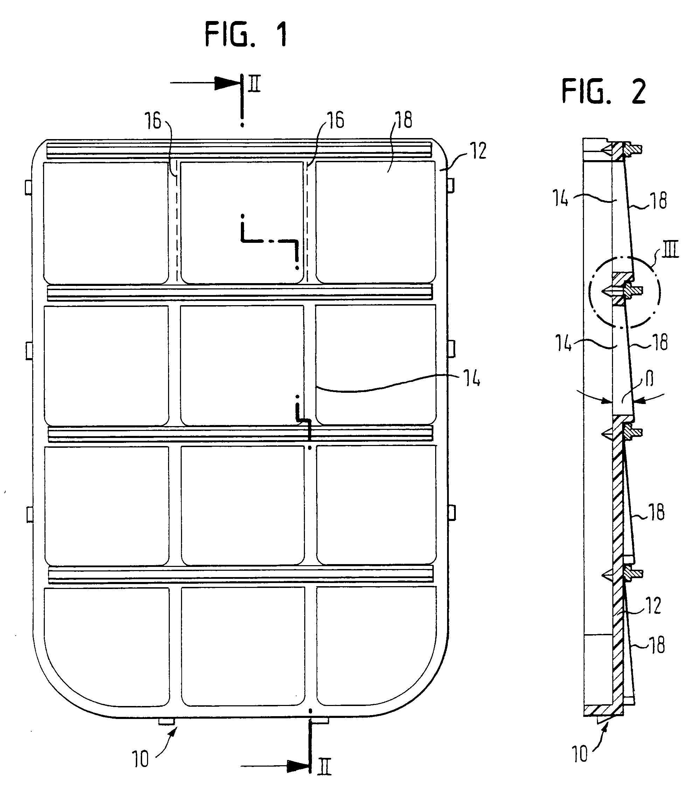

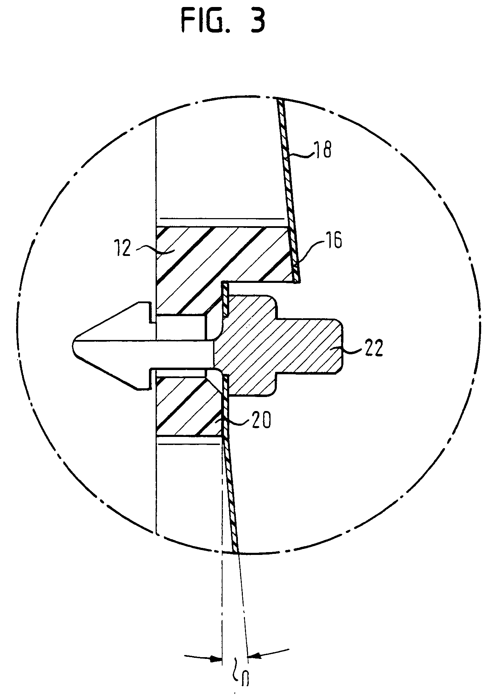

In den Figuren ist ein Rückschlagventil 10 gezeigt, dass einen Rahmen 12 aufweist, der in einer Öffnung einer Fahrzeugkarosserie angebracht werden kann. Der Rahmen besteht aus Kunststoff und ist gitterförmig ausgebildet, so dass insgesamt zwölf Ausströmöffnungen 14 gebildet sind. Am Rand jeder Ausströmöffnung ist ein Ventilsitz 16 vorgesehen, der sich bei der in Figur 1 gezeigten Form der Ausströmöffnungen 14 entlang drei Seitenränder der Ausströmöffnung erstreckt, nämlich entlang den beiden vertikalen Seiten und entlang der unten liegenden Seite. Der Ventilsitz 16 ist bezüglich der Erstreckungsebne des Rahmens 12 jeweils um einen Winkel β (siehe die Figuren 2 und 3) geneigt angeordnet.

Jeder Ausströmöffnung 14 ist eine Ventilklappe 18 zugeordnet, die aus einem dünnen Kunststoffplättchen oder einer Kunststofffolie besteht. Wichtig ist in jedem Fall, dass die Ventilklappe 18 eine gewisse Eigensteifigkeit und daraus resultierend eine gewisse Biegelastizität aufweist.

Jede Ventilklappe 18 ist am Rahmen 10 in einem Montagebereich 20 angebracht, der parallel zur Erstreckungsrichtung des Rahmens 12 ausgerichtet ist. Zur Anbringung der Ventilklappe 18 wird eine Befestigungsklammer 22 verwendet, die durch die Ventilklappe hindurch in den Rahmen 12 eingesteckt ist. Wie insbesondere in Figur 3 zu sehen ist, wird die Ventilklappe zwischen dem Abschnitt, der am Montagebereich 20 fixiert ist und daher parallel zur Erstreckungsrichtung des Rahmens 12 ausgerichtet ist, und dem Abschnitt umgebogen, der am Ventilsitz anliegt. Dies ergibt sich aus dem Winkel β zwischen der Ausrichtung des Ventilsitzes einerseits und der Ausrichtung des Montagebereichs 20 andererseits. Diese der Ventilklappe 18 aufgezwungene Biegung führt zu einer elastischen Vorspannung, welche die Ventilklappe 18 elastisch gegen den Ventilsitz 16 beaufschlagt. Dabei ist die Anlagekraft der Ventilklappe 18 am Ventilsitz 16 vorzugsweise größer als die Gewichtskraft der Ventilklappe 18, so dass das Rückschlagventil auch waagrecht liegend, also über Kopf, angeordnet sein kann. Die Rückstellkräfte sind dann entgegen der Wirkung der Schwerkraft in der Lage, die Ventilklappe 18 zuverlässig gegen den Ventilsitz 16 zu beaufschlagen.
Die Ventilklappe kann auch abweichend als gezeigt am Rahmen befestigt werden. Es könnten separate Klemmleisten oder angespritzte Klemmleisten verwendet werden. Es ist auch möglich, die Ventilklappe durch ein Filmscharnier mit dem Rahmen zu verbinden. Außerdem können angespritzte Fixier- und Haltepunkte bzw. Schlitze verwendet werden. Es ist außerdem möglich, die Ventilklappe durch Schweißen, Kleben oder Verschrauben am Rahmen anzubringen. Es ist auch möglich, die Ventilklappe direkt an dem Rahmen anzuspritzen und sie beispielsweise mit zusätzlichen Leisten, Klammern oder ähnlichem, gegen den Rahmen zu verspannen. Schließlich ist es möglich, die elastische Vorspannung der Ventilklappe durch eine Biegung der Ventilklappe im Montagebereich zu erzielen, beispielsweise durch Umbiegen oberhalb des Montagebereichs oder durch eine dort angeordnete Sicke bzw. einen Buckel. Es ist auch möglich, den Ventilsitz parallel zur Erstreckungsrichtung des Rahmens auszurichten.

Alternativ zu einem ebenen Ventilsitz kann auch ein gekrümmter Ventilsitz verwendet werden. Auf diese Weise legt sich die Klappe beim Schließen erst an einer Kante des Ventilsitzes an, bevor sie vollständig schließt.

## Patentansprüche

1. Rückschlagventil (10), insbesondere zur Entlüftung eines Fahrzeug-Innenraumes, mit einem Rahmen (12), in welchem mindestens eine Ausströmöffnung (14) gebildet ist, die von einem Ventilsitz (16) umgeben ist, und mindestens einer Ventilklappe (18), die zwischen einer geschlossenen Stellung, in der sie an dem Ventilsitz (16) anliegt und die Ausströmöffnung (14) verschließt, und einer geöffneten Stellung verstellbar ist, in der sie die Ausströmöffnung (14) freigibt, **dadurch gekennzeichnet, daß** die Ventilklappe (18) aus einem elastisch federnden Material besteht und derart angebracht ist, daß eine Rückstellkraft erzeugt wird, welche die Ventilklappe (18) gegen den Ventilsitz (16) beaufschlagt.

2. Rückschlagventil nach Anspruch 1, **dadurch gekennzeichnet, daß** ein Randbereich der Ventilklappe (18) am Rahmen (12) in einer ersten Ausrichtung angebracht ist, die sich von der Ausrichtung des Ventilsitzes (16) unterscheidet.

3. Rückschlagventil nach Anspruch 1, **dadurch gekennzeichnet, daß** ein Randbereich der Ventilklappe (18) am Rahmen (12) verformt wird, so daß die Rückstellkraft erzeugt wird.

4. Rückschlagventil nach Anspruch 1, **dadurch gekennzeichnet, daß** am Rahmen ein Andruckelement angebracht ist, das die Ventilklappe (18) derart vorspannt, daß sie gegen den Ventilsitz (16) beaufschlagt wird.

5. Rückschlagventil nach einem der vorhergehenden Ansprüche, **dadurch gekennzeichnet, daß** die durch die elastische Vorspannung der Ventilklappe (18) erzeugte Rückstellkraft größer ist als die Gewichtskraft der Ventilklappe (18).
